# EUROPEAN PATENT APPLICATION

(11) **EP 1 357 526 A2**
(43) Date of publication of application: **29.10.2003**
(21) Application number: 03252416.7
(22) Date of filing: 16.04.2003
(51) Int. Cl.: G07F 11/58

(54) **Commodity carrying-out apparatus of automatic vending machine**

(30) Priority: 24.04.2002 JP 2002122463
(71) Applicant: Sanden Corporation, Isesaki-shi, Gunma 372-8502 (JP)
(72) Inventor: Tamura, Misao, Sanden Corporation, Isesaki-shi, Gunma 372-8502 (JP)
(74) Representative: Haley, Stephen

(57) **Abstract**

The present invention provides a commodity carrying-out apparatus of an automatic vending machine capable of reliably carrying out a commodity one by one without causing falling down or clinging of the commodities, and efficiently housing even commodities having no definite shape.

According to the present invention, the commodities in the commodity column can be supported by the commodity supporting members, and therefore even when the commodity carried out of the commodity column falls down or is changed in its posture, the following commodity does not fall down due to the carried-out commodity. Since the commodity supporting members each exist between the commodities, clinging of the commodities to each other does not occur. As a result, the commodities can be reliably carried out one by one. Even the commodities having no definite shape, which cannot be self-sustained in a vertical orientation, can be housed in the vertical orientation by being supported respectively by the commodity supporting members.

## Description

The present invention relates to a commodity carrying-out apparatus of an automatic vending machine capable of selling commodities having various shapes and sizes such as beverages enclosed in a can, a bottle, a plastic bottle, a paper cartons or the like, dairy commodities contained in a predetermined container such as a cup, and a confectionery contained in a box or a bag.

A known conventional automatic vending machine of this kind is disclosed in Japanese Patent Laid-Open No. 2001-357450, which comprises: a vending machine body having a commodity output port in a lower part of a front surface; a plurality of commodity columns arranged in the width direction and in the up-and-down direction of the vending machine body; a commodity bucket arranged in front of each commodity column so as to be able to move in the width direction and in the up-and-down direction of the vending machine body; and a moving mechanism for moving the commodity bucket in the width direction and in the up-and-down direction of the vending machine body.

In this automatic vending machine, when a commodity is selected, the commodity bucket is moved to a commodity column corresponding to the selected commodity by means of the moving mechanism, the commodity is carried out into the commodity bucket by means of the commodity carrying-out apparatus of the commodity column, and the bucket, which has received the commodity, is moved to the commodity output port by means of the moving mechanism so that the commodity of the commodity bucket is carried out into the commodity output port.

The commodity carrying-out apparatus of said automatic vending machine includes a pair of pulleys each placed at both end sides of the commodity column, and an endless belt wound around each of the pulleys, so as to move the commodity in the commodity column in the predetermined direction by the belt by rotating the pulleys in the predetermined direction with the motor to sequentially carry the commodity out from one end side of the commodity column.

In said commodity carrying-out apparatus, the commodities are placed on the belt with aligned thereon. In order to efficiently house a number of commodities, the commodities contained in boxes are housed with each commodity orienting vertically so as to require less space in the arranging direction of the commodities. When flat box-shaped commodities are standing, however, they become unstable, and they easily fall down when they are carried out. The box-shaped commodities may cling to each other when they contact their surfaces each other. Thus, falling down or a change in the posture of the commodity being carried may cause the following commodities to fall down. Also, when a commodity being carried cling to the following commodity, more than one commodities may be carried out at the same time. In the case of commodities having no definite shape such as confectioneries contained in a bag which cannot be self-sustained in the vertical orientation by themselves, they cannot be housed efficiently, and selling of the commodities by the machine may be impossible.

The present invention was achieved in the light of the above-described problems, and is aimed to provide a commodity carrying-out apparatus of an automatic vending machine, capable of reliably carrying out commodities one by one without falling down or clinging, and efficiently housing even the commodities having no definite shape.

In order to attain said object, the present invention is a commodity carrying-out apparatus of an automatic vending machine comprising a pair of pulleys placed at both end sides of a commodity column, and an endless member wound around each of the pulleys so as to move a commodity arranged in a commodity column in the predetermined direction with an endless member by rotating the pulleys in the predetermined direction to carry the commodity out from one end side of the commodity column, and a plurality of commodity supporting members placed between the commodities inside the commodity column are mounted at arbitrary positions of said endless member to be attachable and detachable.

According to the above, the commodities in the commodity column are supported by the commodity supporting members, and therefore even when the commodity carried out of the commodity column falls down or changes in the posture, the following commodity does not fall down due to the commodity which is carried out. In addition, the commodity supporting members are interposed between the commodities, the commodities do not cling to each other. Accordingly the commodities can be reliably carried out one by one. Since each of the commodity supporting members are mounted at arbitrary positions of the endless member to be attachable and detachable, the space between the commodity supporting members can be changed correspondingly to the size and the shape of the commodity, resulting in capability of properly handling various commodities. Further, even the commodity having no definite shape which cannot be self-sustained in the vertical orientation by itself can be housed in the vertical orientation by being supported by each of the commodity supporting members, and therefore such a kind of commodities can be efficiently housed.

In said construction, a mounting portion extending in the commodities arranging direction is provided at one end of said commodity supporting member, and the commodity supporting member is mounted such that the mounting portion is in contact with a surface of the endless member. According to this, the commodity supporting members can be reliably held by means of the mounting portions without tilting or falling down in the arranging direction of the commodities, and the commodities can be always supported by the commodity supporting members with stability.

In said construction, a plurality of recessed portions extending in, for example, the up-and-down direction are formed in the width direction on the commodity supporting surface of the commodity supporting member, whereby the commodity supporting surface of the commodity supporting member is formed to be partially in contact with the commodity. As a result, the commodity supporting surface of the commodity supporting member is partially in contact with the commodity, and therefore the contact area of the commodity supporting member and the commodity becomes smaller, thus making it possible to prevent the commodity from clinging to the commodity supporting member.
FIG. 1 is a front view of an automatic vending machine including a commodity carrying-out apparatus according to one embodiment of the present invention;
FIG. 2 is a sectional front view of the automatic vending machine;
FIG. 3 is a sectional side view of the automatic vending machine;
FIG. 4 is a sectional side view of a commodity column and a commodity bucket;
FIG. 5 is a front view of the commodity column;
FIG. 6 is a perspective view of an essential part of the commodity carrying-out apparatus;
FIG. 7 is a sectional side view of a commodity column housing commodities each contained in a bag, and a commodity bucket; and
FIG. 8 is a sectional side view of a commodity column housing commodities each contained in a cup, and a commodity bucket.

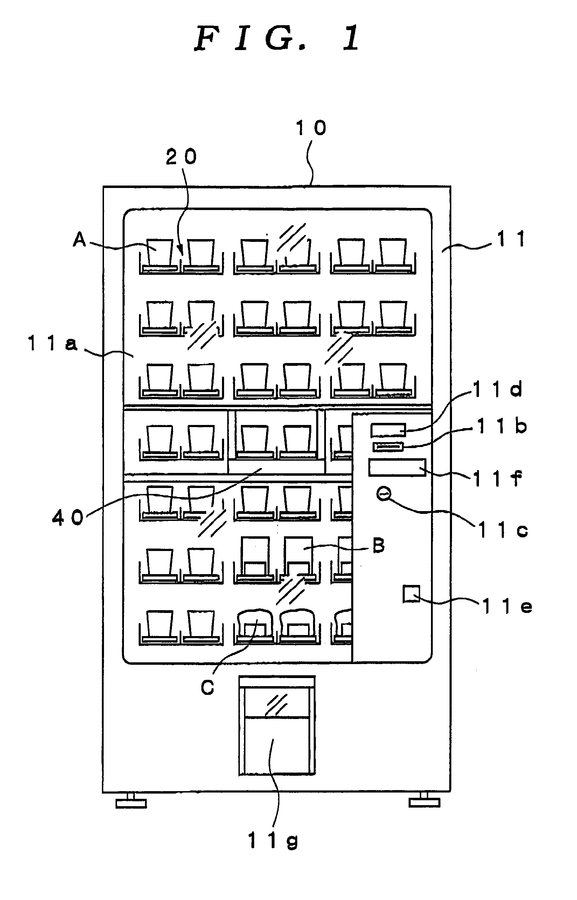

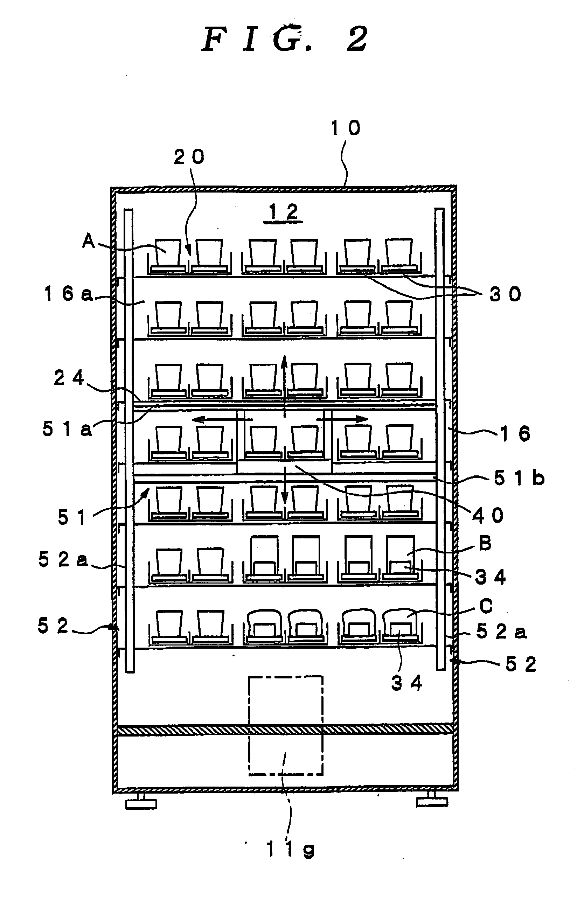

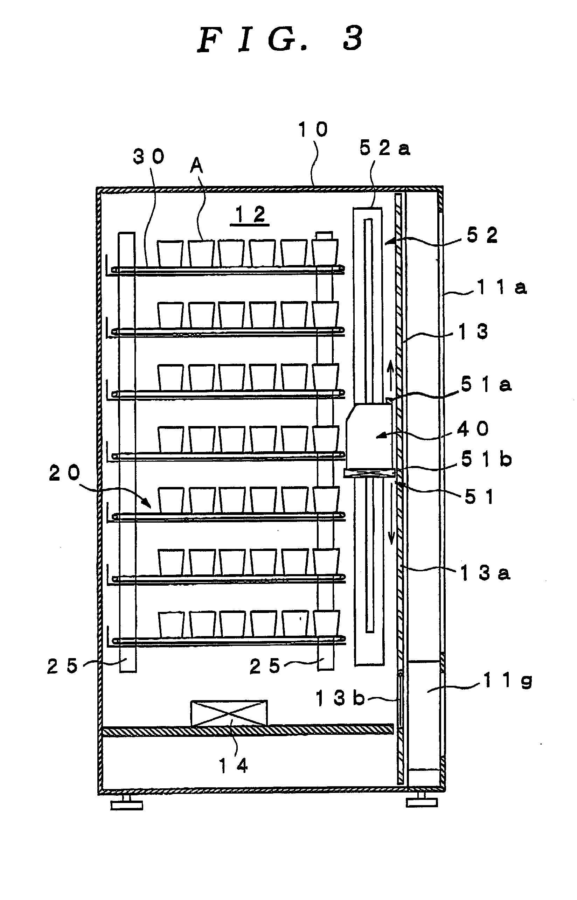

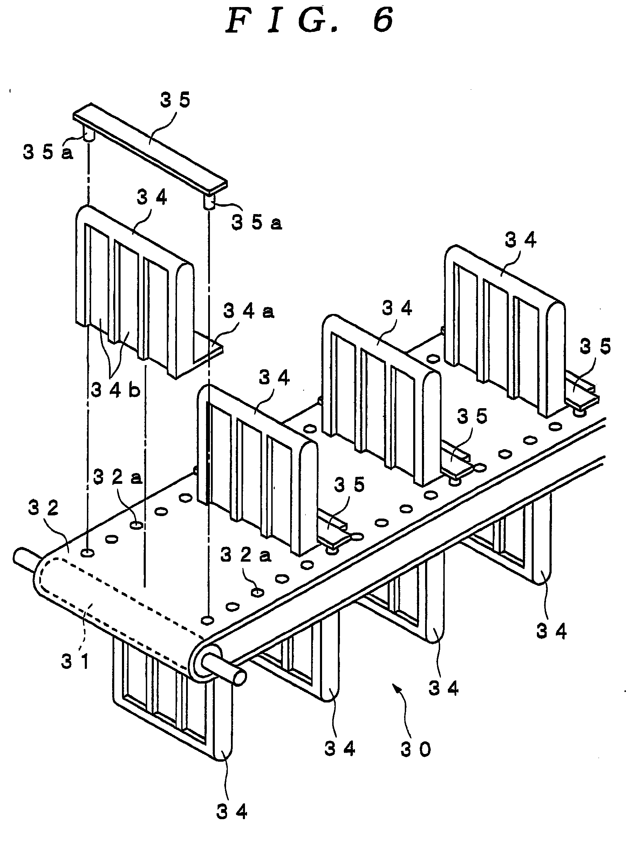

FIG. 1 to FIG. 8 show one embodiment of the present invention.

An automatic vending machine shown in the drawings is constructed by an automatic vending machine body 10 with part of its front surface being formed to be transparent, a plurality of commodity columns 20 arranged in the width direction and in the up-and-down direction of the automatic vending machine body 10, a commodity carrying-out apparatus 30 provided at each of the commodity columns 20, a commodity bucket 40 capable of receiving the commodity carried out of each commodity column 20, and a bucket moving mechanism 50 for moving the commodity bucket 40 in the arranging direction of each commodity column 20.

In the automatic vending machine body 10, the front surface is opened, and the front surface opened part is opened and closed by an outer door 11. The outer door 11 except for a lower part is formed by a transparent glass plate 11a, and on a front surface thereof, there is provided a paper money insertion slot 11b, a coin insertion slot 11c, an amount display 11d, a coin return port lie, a commodity selecting operation unit 11f and a commodity output port 11g. A commodity storage 12 enclosed by an insulation wall is provided in the automatic vending machine body 10, and its front surface is covered with an inner door 13. Most of the inner door 13 is formed by a transparent glass plate 13a, and a commodity carrying-out port 13b is provided in a lower part thereof. A cooling unit 14 is provided at the bottom surface side in the commodity storage 12, and the cooling unit 14 is constructed by a cooler and a fan not shown.

Each commodity column 20 has a column body 21 extending in the back-and-forth direction, which is provided at the automatic vending machine body 10 to be able to be drawn forward. Furthermore, the detailed explanation of the drawing structure of the commodity column 20 is omitted, but it can be constructed by using, for example, a known slide rail or the like. The commodity column 20 has a partition plate 22 for partitioning an interior of the column body 21 in the width direction, and the partition plate 22 is mounted on a base 23 provided at the center in the width direction in the column body 21. Each commodity column 20 is supported by a shelf 24 extending in the width direction for each stage in the up-and-down direction, and each shelf 24 is fixed at predetermined positions in the up-and-down direction by a plurality of struts 25 vertically provided on both sides in the width direction within the vending machine body 10.

Each commodity column 20 is provided with two commodity carrying-out apparatuses 30, and each commodity carrying-out apparatuses 30 is arranged in the width direction to each other within the column body 21. Each commodity carrying-out apparatuses 30 is constituted of a pair of pulleys 31 rotatably mounted at a front end side and a rear end side of the column body 21 respectively, a belt 32 as an endless member wound around each pulley 31, and a gear unit 33 moving in synchronism with the pulley 31 at the front end side, and a commodity is placed on an upper surface of the belt 32. In other words, in each commodity column 20 two lines of the commodities are disposed at both sides of partition plate 22. The gear unit 33 is constituted of a first gear 33a connected to a rotating shaft of the pulley 31, a second gear 33b meshed with the first gear 33a, and a third gear 33c meshed with the second gear 33b, and the third gear 33c is meshed with a gear at the side of the commodity bucket 40 that will be described later.

A plurality of commodity supporting plates 34 disposed between commodities are provided on the belt 32 to be attachable and detachable. Each commodity supporting plate 34 is mounted perpendicularly to the surface of the belt 32, and a mounting piece 34a extending in the commodities arranging direction, namely, extending rearward along the surface of the belt 32 is provided at one end thereof. In this case, the commodity supporting plate 34 is mounted so that the mounting piece 34a is in contact with the surface of the belt 32, and a plurality of holding plates 35 for holding the mounting pieces 34a are mounted to the belt 32. The holding plate 35 is formed to be slightly longer than a width dimension of the commodity supporting plate 34, and pins 35a extending downward are provided at both ends of the holding plate 35. Specifically, a plurality of holes 32a are equidistantly provided in a circumferential direction of the belt 32 at both sides in the width direction of the belt 32, each of the pins 35a of the holding plate 35 is inserted into an arbitrary hole 32a of the belt 32, and the mounting piece 34a of the commodity supporting plate 34 is held between the holding plate 35 and the belt 32, whereby the commodity supporting plate 34 is fixed to the belt 32. A plurality of recessed portions 34b extending in the up-and-down direction are formed in the width direction on both surfaces in the back-and-forth direction (commodity supporting surface) of the commodity supporting plate 34, so that the portion except for each recessed portion 34b is in contact with the commodity.

The commodity bucket 40 includes a pair of pulleys 42 rotatably mounted respectively at a front end side and a rear end side of a bucket body 41, and an endless belt 43 wound around each of the pulleys 42, and one of the pulleys 42 is rotated by a motor not shown, whereby the belt 43 is rotated in a predetermined direction. The commodity bucket 40 includes a gear 44 for driving the commodity carrying-out apparatus 30 of each commodity column 20, and the gear 44 is rotated by a motor not shown.

The bucket moving mechanism 50 is constituted of a first driving unit 51 for moving the commodity bucket 40 in the width direction, and a pair of second driving units 52 for moving the first driving unit 51 in the up-and-down direction, and each of the second driving units 52 is arranged on both sides in both width directions within the vending machine body 10. The first driving unit 51 includes a pair of upper and lower guide rails 51a and 51b for supporting the commodity bucket 40 to be movable, so that the commodity bucket 40 is moved along each of the guide rails 51a and 51b by a motor not shown. The second driving unit 52 is constituted of a guide rail 52a for movably supporting the first driving unit 51, and a motor (not shown) for moving the first driving unit 51. In this bucket moving mechanism 50, positions of each commodity column 20 in this width direction and in the up-and-down direction are detected by position detecting means constituted of an optical sensor, pulse detection means of the motor or the like, whereby the commodity bucket 40 is adapted to be moved to any commodity column 20 or the commodity output port 11g by each of the driving units 51 and 52.

In the automatic vending machine constructed as described above, a plurality of kinds of commodities A, B and C are housed in the respective commodity columns 20. In this case, the commodity A is a commodity such as a dairy commodity contained in a cup, the commodities B and C are commodity and the like contained in a box and a bag. In this case, in the commodity columns 20 housing the commodities B and C, the commodity supporting plates 34 are mounted on the belt 32 of the commodity carrying-out apparatus 30, and each of the commodities B and C is housed between the commodity supporting plates 34 one by one.

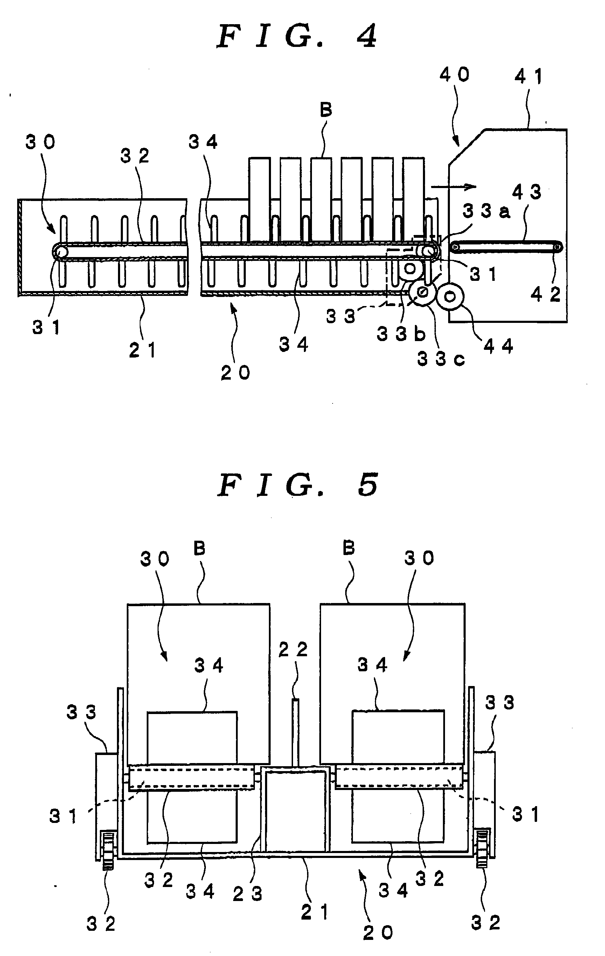

In said automatic vending machine, when money is inserted and a commodity is selected, the commodity bucket 40 is moved to the commodity column 20 corresponding to the selected commodity by the bucket moving mechanism 50. In this case, the belt 43 of the commodity bucket 40 is located at the same height as the belt 32 of the commodity column 20, and the gear 44 of the commodity bucket 40 is meshed with the third gear 33c of the commodity carrying-out apparatus 30. Next, the belt 43 of the commodity bucket 40 is rotated, and the gear 44 of the commodity bucket 40 is rotated. As a result, the belt 32 of the commodity carrying-out apparatus 30 is rotated by the gear unit 33, and the commodity B, for example, on the belt 32 is carried out to the commodity bucket 40, transferred onto the belt 43 of the bucket 40, as shown in FIG. 4, and housed in the commodity bucket 40. The commodity bucket 40 receiving the commodity B is moved to the commodity output port 13b by the bucket moving mechanism 50, and the commodity B inside the commodity bucket 40 is carried out to the commodity output port 11g.

When the commodity B of the commodity column 20 is carried out onto the commodity bucket 40, the following commodity B does not fall due to the carried-out commodity B even if the commodity B at the forward end falls down or causes a change in the posture, because each of the commodities B of the commodity column 20 is supported by each of the commodity supporting plates 34 in the back-and-forth direction. Since the commodity supporting plates 34 exist between the commodities B, clinging does not occur between the commodities. In this case, only the portion other than each of the recessed portions 34b is in contact with the commodity on both sides in the back-and-forth direction of the commodity supporting plate 34, which reduces the contact area between the commodity supporting plate 34 and the commodity B, and therefore the commodity B does not cling to the commodity supporting plate 34.

As described above, according to the embodiment, a plurality of commodity supporting plates 34 placed between the commodities are provided on the belt 32 of the commodity carrying-out apparatus 30 such that each commodity B is supported by each of the commodity supporting plates 34, whereby the following commodities do not fall down while the commodity is carried out, clinging of the commodities can be prevented due to the presence of each of the commodity supporting plates 34, and each of the commodities B can be reliably carried out one by one. Since each of the commodity supporting plates 34 is mounted at any position of the belt 32 to be attachable and detachable in this case, the space between the commodity supporting plates 34 can be changed according to the size and shape of the commodities, thus making it possible to be suitably adapted to various kinds of commodities.

Since the mounting piece 34a extending in the commodity arranging direction of the commodity supporting plate 34 is provided, and the mounting piece 34a is mounted in contact with the surface of the belt 32, the commodity supporting plate 34 is reliably held by the mounting piece 34a without inclining or falling down in the back-and-forth direction, and the commodity B can be always supported by each of the commodity supporting plates 34 with stability.

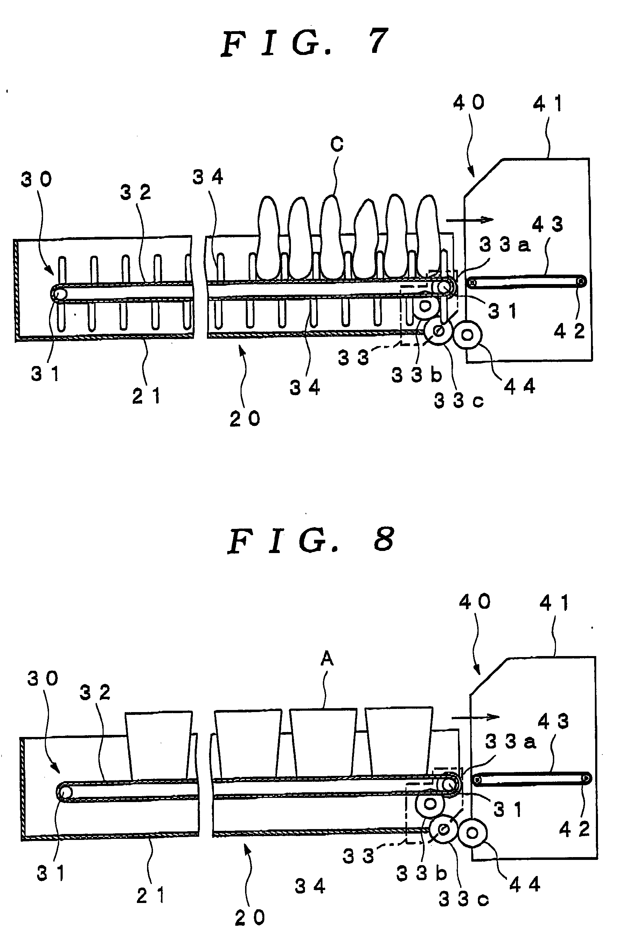

The commodity B contained in the box is explained in said embodiment, but in the case of the commodity C contained in the bag as shown in Fig. 7, even the commodity C which is the commodity having no definite shape can be housed in the vertical orientation, and the commodity C can be efficiently housed when it is supported by the commodity supporting plate 34. In this case, the commodity C can be also prevented from falling down and clinging to the other commodity C, as in the case of said commodity B.

Further, in the case of commodity A being able to be self-sustained in the vertical orientation, commodity A may be contained in a cup without commodity supporting plate 34, as shown in Fig. 8.

In said embodiment, the apparatus using the belt 32 as the endless member is shown, but the apparatus using a chain or the like may be adopted.

## Claims

1. A commodity carrying-out apparatus of an automatic vending machine comprising a pair of pulleys placed at both end sides of a commodity column, and an endless member wound around each of the pulleys so as to move a commodity arranged in a commodity column in the predetermined direction with the endless member by rotating the pulleys in the predetermined direction to carry the commodity out from one end side of the commodity column,
wherein a plurality of commodity supporting members placed between the commodities inside the commodity column are mounted at arbitrary positions of said endless member to be attachable and detachable.

2. The commodity carrying-out apparatus of the automatic vending machine according to claim 1, wherein
a mounting portion extending in the commodities arranging direction is provided at one end of said commodity supporting member, and the commodity supporting member is mounted such that the mounting portion is in contact with a surface of the endless member.

3. The commodity carrying-out apparatus of the automatic vending machine according to claim 1, wherein
a commodity supporting surface of said commodity supporting member is formed to be partially in contact with the commodity.

4. The commodity carrying-out apparatus of the automatic vending machine according to claim 1, wherein
a plurality of recessed portions extending in the up-and-down direction are formed on the commodity supporting surface of said commodity supporting member in the width direction.
